# EUROPEAN PATENT APPLICATION

(11) **EP 4 725 817 A1**
(43) Date of publication of application: **15.04.2026**
(21) Application number: 25206304.5
(22) Date of filing: 02.10.2025
(51) Int. Cl.: B62J 43/30, B62M 9/128, H01R 13/52, H01R 24/86

(54) **BICYCLE ELECTRIC DEVICE**

(30) Priority: 08.10.2024 IT 202400022305
(71) Applicant: Campagnolo S.r.l., 36100 Vicenza (VI) (IT)
(72) Inventor: Fassina, Michele, 35010 Vigonza (PD) (IT); Piccolo, Antonio, 36077 Altavilla Vicentina (VI) (IT)
(74) Representative: Montanari, Daniele

(57) **Abstract**

Bicycle electric device (1) comprising a first electric element (10) and a second electric element (12), removably connected to each other, each of which comprises a plurality of N conductive terminals (14, 16), wherein, when the first (10) and the second electric element (12) are connected, each conductive terminal (14) of the first electric element (10) is in electric contact with a corresponding conductive terminal (16) of the second electric element (12), forming a plurality of N conductive junctions between the first electric element (10) and the second electric element (14), and wherein at least one conductive junction is used to transfer power, the electric bicycle device (1) **being characterized in that** it comprises an insulating structure (44) interposed between and in direct contact with the first electric element (10) and the second electric element (12), when connected, the insulating structure (44) comprising a plurality of at least N-1 deformable insulating members (46), in which each deformable insulating member (46) is located around a single conductive junction.

## Description

### TECHNICAL FIELD

The present invention relates to a bicycle electric device.

In particular, the present invention relates to a bicycle electric device powered by a battery. An application to which the present invention will make explicit reference without thereby losing generality.

### STATE OF THE ART

It is well known that bicycles can be provided with electric devices, such as a front derailleur, a rear derailleur, both identified hereinafter as "derailleur", a suspension, a saddle position adjuster, a navigator, a cycle computer, a torque or power meter, a motor of a powerassisted bicycle, a manually operated command device of another electric bicycle device, and/or similar devices.

"Generally, such bicycle electric devices comprise a support body configured to be fixed to the bicycle and an electric, electronic, or electrically actuated element, hereinafter referred to simply as an 'electric element,' carried by the support body.

The electric element is powered by an electric power supply unit, in particular a battery, electrically connected to the electric device to supply power thereto.

The electric power supply unit may be mounted directly on the bicycle electric device or be external thereto, for example mounted on the frame or on another bicycle electric device.

For example, the electric element may comprise an actuator configured to control, on command, the movement of at least one movable component of the same bicycle electric device, a control electronic unit, an information notification unit, and/or the like.

In the case of a derailleur, for example, the electric element may comprise a geared motor configured to control, on command, the movement of the chain guide of the derailleur, in particular the cage in the case of the front derailleur or the rocker in the case of the rear derailleur, so as to engage the chain with a respective chainring/sprocket of the crankset or cassette of the bicycle.

Generally, the battery is removably fixed to the support body of the bicycle electric device, such that it can be easily removed, in order to be connected to an external power supply network for recharging or to be replaced.

In some cases, the battery may be positioned in direct contact with the electric element to be powered. In particular, the support body of the bicycle device is provided with a concave seat provided with male-type electric contacts configured to be electrically connected to conjugated female-type electric contacts present on a projecting electric connector of the battery, the shape of which is complementary to the concave seat. The projecting electric connector of the battery is shaped to engage the concave seat of the support body and connect the electric contacts to one another, thereby establishing the electric connection between the battery and the device to be powered. Alternatively, the electric connectors of the battery and the electric device are arranged on planar surfaces configured to be brought into contact and establish electric contact between the electric contacts of the battery and the electric device.

In other cases, instead, the battery may be positioned spaced from the electric element to be powered and may be electrically connected thereto via a power cable. In this case, the concave seat is provided on an electric connector present at one end of the power cable and configured to be connected to the projecting electric connector of the battery.

In known bicycle electric devices, an annular gasket is also provided interposed between the concave seat of the support body or its power cable and the projecting electric connector of the battery. In particular, the annular gasket is disposed about the perimeter edge of the concave seat, around the electric contacts, so as to surround all the electric contacts without interruption and ensure fluidtightness once the battery or its power cable is fitted onto the support body.

A known bicycle electric device provided with a similar annular gasket is described, for example, in documents EP4155178 A1 and EP4155184 A1. In particular, in the bicycle electric devices described in EP4155178 A1 and EP4155184 A1, the electric contacts are of the pogo-pin type, and the annular gasket is disposed around the male-type electric contacts present in the seat of the support body of the bicycle electric device.

The electrically actuated device described in EP4155178 A1 is further provided with a thin electrically insulating plate arranged inside the support body, positioned at the base of the male electric contacts of the support body and interposed between the electronic board that supports the same male electric contacts and the back wall of the concave seat, so as to electrically insulate the inner portion of the support body that houses the electronic board supporting the male electric contacts. In other words, the electrically insulating plate does not engage the concave seat and does not insulate from one another the portions of the male electric contacts protruding inside the concave seat.

The electrically actuated bicycle device described in EP4155184 A1 is similar to that described in EP4155178 A1 and differs therefrom in that the battery is connected to the electric element to be powered via a power cable, and the concave seat is provided on the electric connector present at the end of the power cable configured to be connected to the projecting electric connector of the battery. The electrically insulating plate is disposed inside the electric connector of the power cable, behind the back wall of the concave seat.

Document US2019100280 A1 describes an electrically actuated rear derailleur for a bicycle provided with an annular gasket, which is interposed between the support body of the derailleur and the electric connector of the battery. In particular, the support body is provided with a seat that houses the male-type electric connectors and is configured to be engaged by the electric connector of the battery. The annular gasket is housed in an annular groove positioned at the perimeter edge of the seat of the support body and surrounds all the electric contacts without interruption.

Despite the presence of the annular gaskets described above, the Applicant has found that, when the battery is disconnected from the support body or from its power cable, the electric contacts are exposed to the external environment. Water, moisture, dust, or other debris may accumulate between the individual electric contacts and may cause short circuits between them or other malfunctions upon subsequent fitting of the battery, with the obvious drawbacks that this entails.

In addition, any high-pressure water jets that may strike the bicycle device, for example during washing with a pressure washer, may cause water infiltration which, depositing between the individual electric contacts, may lead to short circuits.

Depositing at the electric contacts, water may further cause an electrolysis reaction that leads to the deposition of salts between electric contacts at different potentials and generates a galvanic reaction between them that results in the depletion of the metallic material from the lowerpotential electric contact (anode) and its deposition on the higher-potential electric contact.

There is therefore a need to provide a bicycle electric device capable of avoiding the risk of short circuits due to the deposition or infiltration of water, moisture, dust, or other debris between the individual electric contacts.

It is therefore an object of the present invention to provide a bicycle electric device capable of meeting the above needs.

### SUMMARY OF THE INVENTION

In accordance with the above objects, the present invention provides a bicycle electric device as defined in claim 1 and preferably, though not necessarily, in any one of the claims dependent thereon.

The claims describe preferred embodiments of the present invention, forming an integral part of the present description.

### BREIF DESCRIPTION OF THE FIGURES

In the following, some embodiments of the invention will be described for a better understanding thereof, by way of non-limiting example and with reference to the attached figures, in which:
Figure 1 schematically shows a bicycle provided with at least one bicycle electric device made according to the present invention, with parts removed for clarity,
Figures 2 and 3 are two perspective and partially exploded views of a first embodiment of a bicycle electric device made according to the present invention, with parts removed for clarity,
Figure 4 is a sectional view of the bicycle electric device illustrated in Figures 2 and 3, with parts removed for clarity,
Figures 5 and 6 are two perspective and partially exploded views of a second embodiment of a bicycle electric device made according to the present invention, with parts removed for clarity,
Figure 7 is a sectional view of the bicycle electric device shown in Figures 5 and 6, with parts removed for clarity, and
Figures 8, 9, 10, 11, and 12 are enlarged perspective views, with parts removed for clarity, of respective embodiments of an electric connector of the bicycle electric device illustrated in Figures 5 and 6.

### EMBODIMENTS OF THE INVENTION

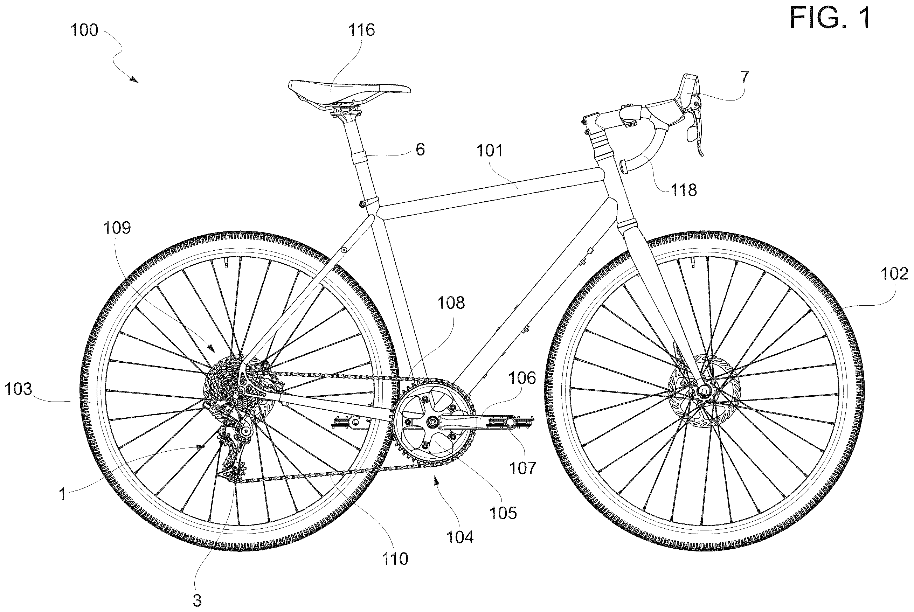

With reference to figure 1, the numeral 100 indicates, as a whole, a bicycle. The bicycle 100 comprises a frame 101, a front wheel 102, and a rear wheel 103 rotatably connected to the frame 101.

Additionally, the bicycle 100 preferably comprises a transmission 104 configured to transmit torque to the rear wheel 103 to allow the forward movement of the bicycle 100. More in detail, the transmission 104 preferably comprises a crankset 105 associated with the bottom bracket of the bicycle 100.

The crankset 105 comprises a pair of crank arms 106 provided with pedals 107. Additionally, the crankset 105 preferably comprises one or more chainrings 108, preferably arranged coaxially and side by side, and provided with a different number of teeth from one another.

The transmission 104 preferably further comprises a sprocket set or cassette 109 carried by the hub of the rear wheel 103 and preferably provided with a plurality of sprockets arranged coaxially and side by side and provided with a different number of teeth from one another.

Additionally, the transmission 104 comprises a flexible transmission member 110, for example a chain or a belt, looped around between a chainring 108 and a sprocket of the cassette 109.

As it is known, the bicycle 100 may comprise a front brake (not showed) associated with the front wheel 102 and/or a rear brake (not showed) associated with the rear wheel 103.

Additionally, the bicycle 100 preferably comprises a saddle 116 movably carried by the frame. The bicycle 100 also comprises a handlebar 118 carried by a front portion of the frame 101 with respect to the forward movement of the bicycle.

In the non-limiting shown example, the bicycle 100 is a road or gravel bicycle provided with a drop-bar type handlebar 118. It is understood that the bicycle 100 may also comprise a city bicycle or a mountain bike provided with front and/or rear suspensions, and or another similar bicycle.

With reference to the example shown in figure 1, the bicycle 100 further comprises a bicycle electric device 1.

Additionally, in the present description and in the attached claims, with the expression "electric device" it is meant a device powered by an electric power supply that may further comprise electric or electronical components and/or a data processing system, that is, an electronic device.

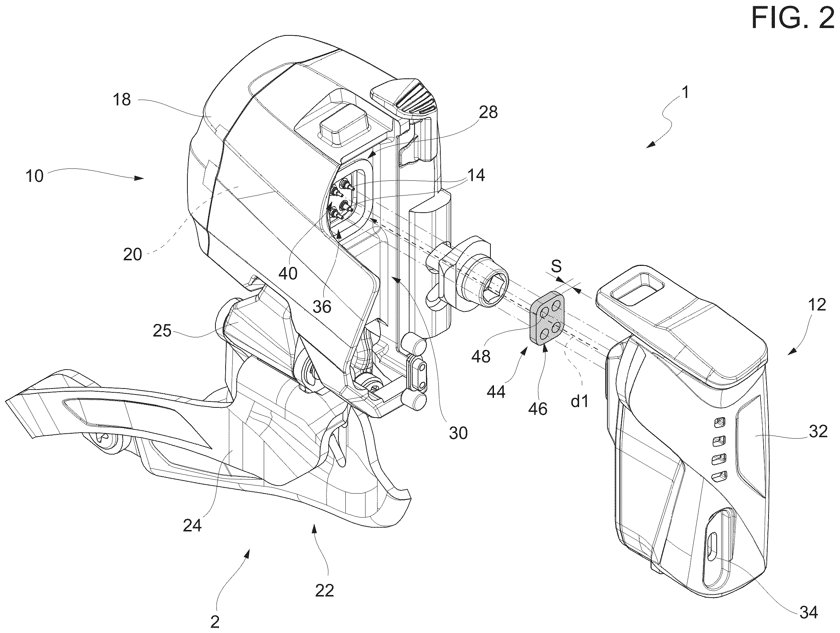

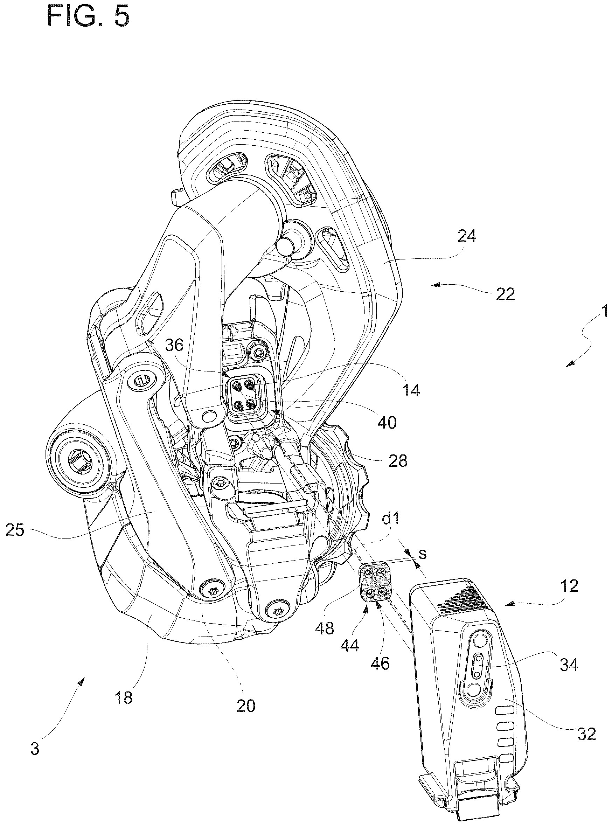

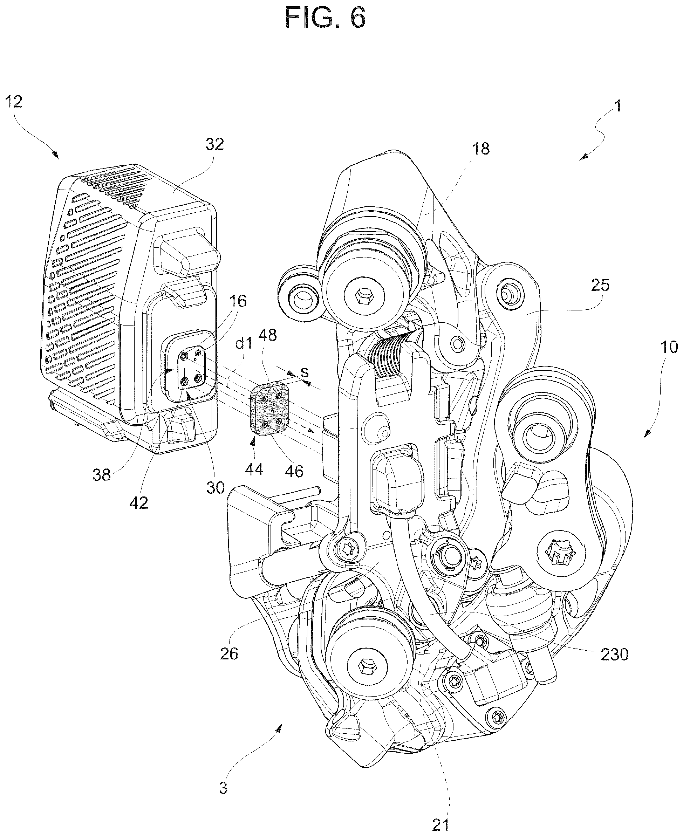

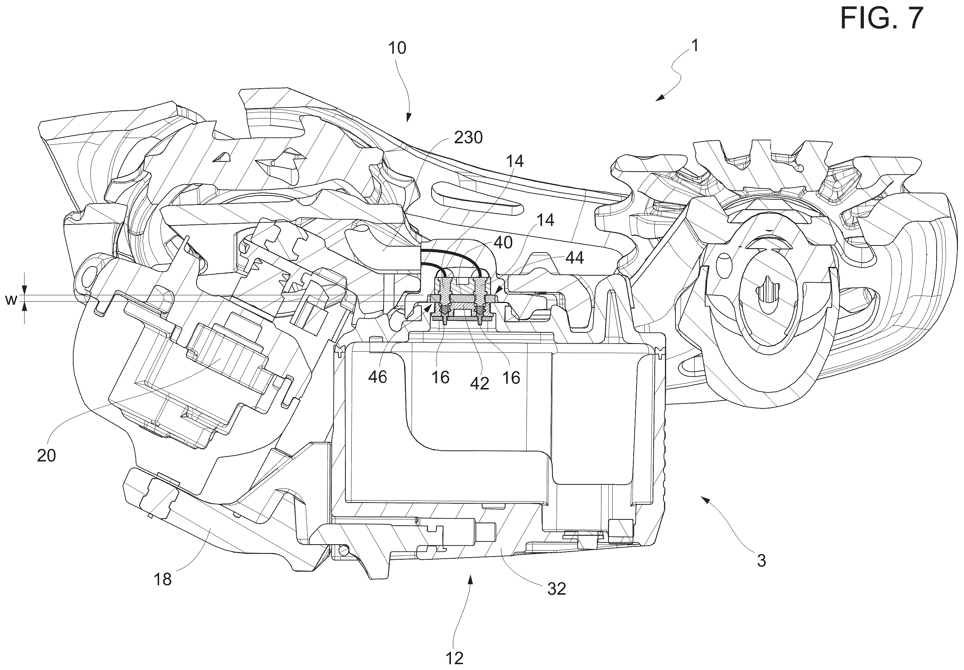

In the non-limiting example shown in figures 2, 3, and 4, the bicycle electric device 1 comprises a front derailleur 2 suitable for being associated with the crankset 105. In the non-limiting example shown in figures 5, 6, and 7, on the other hand, the bicycle electric device 1 comprises a rear derailleur 3 suitable for being associated with the sprocket set 109.

Additionally or alternatively, the device 1 may comprise a front suspension (not shown), a rear suspension (not shown), a saddle position adjuster 5 (schematically shown in figure 1) associated with the saddle 116, a satellite navigation device (not shown), a cycle computer (not shown), an information notification unit (not shown), one or more lighting devices (not shown), a training device, an antitheft device (not shown), a manually operated bicycle control 7, a bicycle electric connector and/or another similar bicycle electronic device.

With reference to the example shown in figures 2, 3, and 4, the bicycle electric device 1 comprises a first electric element 10 and a second electric element 12. The second electric element 12 is configured to be removably fixed on the first electric element 10. More in detail, the second electric element 12 is preferably configured to be removably mounted on the first electric element 10.

Additionally, the first electric element 10 and the second electric element 12 are preferably separated and distinct from each other.

The first electric element 10 comprises a plurality of N conductive terminals 14. The second electric element 12 comprises a plurality of N conductive terminals 16, advantageously complementary to the conductive terminals 14 of the first electric element 10.

In other words, the first electric element 10 comprises at least two conductive terminals 14. Analogously, also the second electric element 12 comprises at least 2 conductive terminals 16.

The conductive terminals 14 and 16 of the first electric element 10 and of the second electric element 12, respectively, are configured so that, when the first electric element 10 and the second electric element 12 are connected one to the other, the conductive terminals 14 of the first electric element 10 are in contact with the associated conductive terminals 16 of the second electric element 12, so as to from a plurality of N conductive junctions between the first electric element 10 and the second electric element 12.

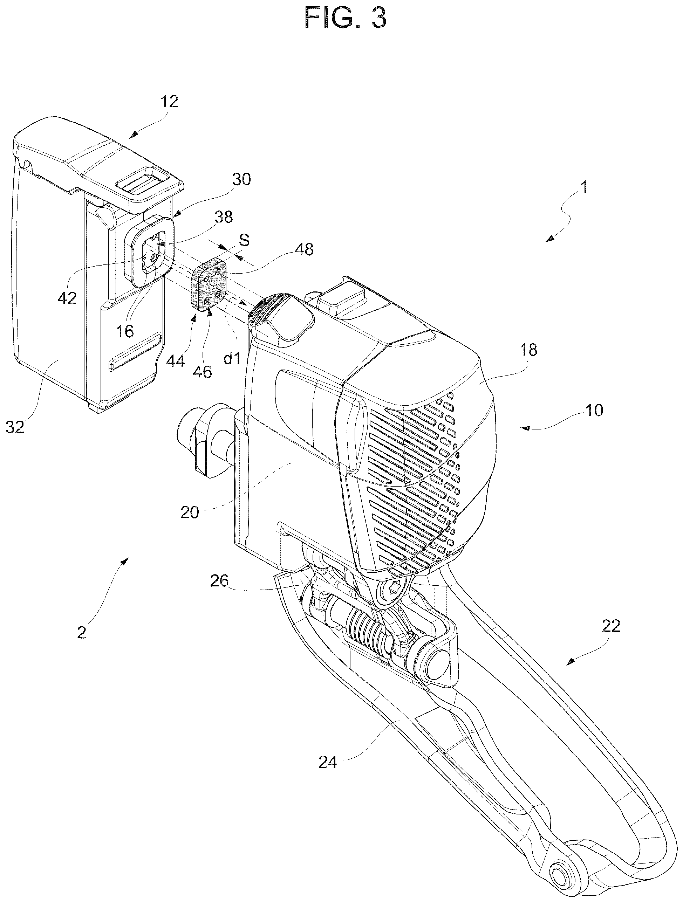

Furthermore, with reference to the figures 2 and 3, the first electric element 10 and the second electric element 12 are configured to be coupled to each other along a predetermined coupling direction d₁.

Preferably, the first electric element 10 is suitable for being carried by the bicycle 100. For example, the first electric element 10 may be mounted on the frame 101, on a crank arm 106, on the handlebar 118, or on another component of the bicycle 100, advantageously in a removable manner.

More in detail, the first electric element 10 comprises a support body 18 suitable for being carried by the bicycle 100. For example, the support body 18 may be mounted/fixed on the bicycle 100. In particular, the support body 18 may be removably mounted on the bicycle 100 by means of threaded coupling elements or other similar coupling elements.

Additionally, the first electric element 10 preferably comprises an electrically actuated device 20 suitable for being carried by the support body 18. In particular, the support body 18 is hollow inside and the apparatus 20 is preferably suitable for being housed within the interior of the support body 18.

The electrically actuated device 20 preferably comprises an actuator, such as an electric motor or a gear motor.

Alternatively or additionally, the electrically actuated device 20 may comprises an electronic data processing system, an electronic data/signal transmission system, an electronic data/signal reception system, and/or another similar electrically powered system.

With reference to the example shown, in particular, the first electric device 10 further comprises a movable member 22 movably carried by the support body 18.

The electrically actuated device 20 is suitable for moving the movable member 22 in a controlled manner.

More in detail, the movable member 22 preferably comprises a chain guide 24.

In the example shown in figures from 2 to 6, the chain guide 24 preferably comprises a cage of the front derailleur 2.

The electrically actuated device 20, in particular the electric motor or the gear motor, is preferably configured to control the shifting of the chain guide 24 with respect to the support body 24.

Preferably, the chain guide 24 is connected to the support body 18 by a pair of links 25 and 26 which define a parallelogram linkage mechanism.

The electrically actuated device 20 is mechanically connected to at least one of the two links 25 or 26 to control their rotation and, therefore, the shifting of the chain guide 24 with respect to the support body 18, so as to make the flexible transmission member 110 engage with a predefined chainring 108 of the crankset 105.

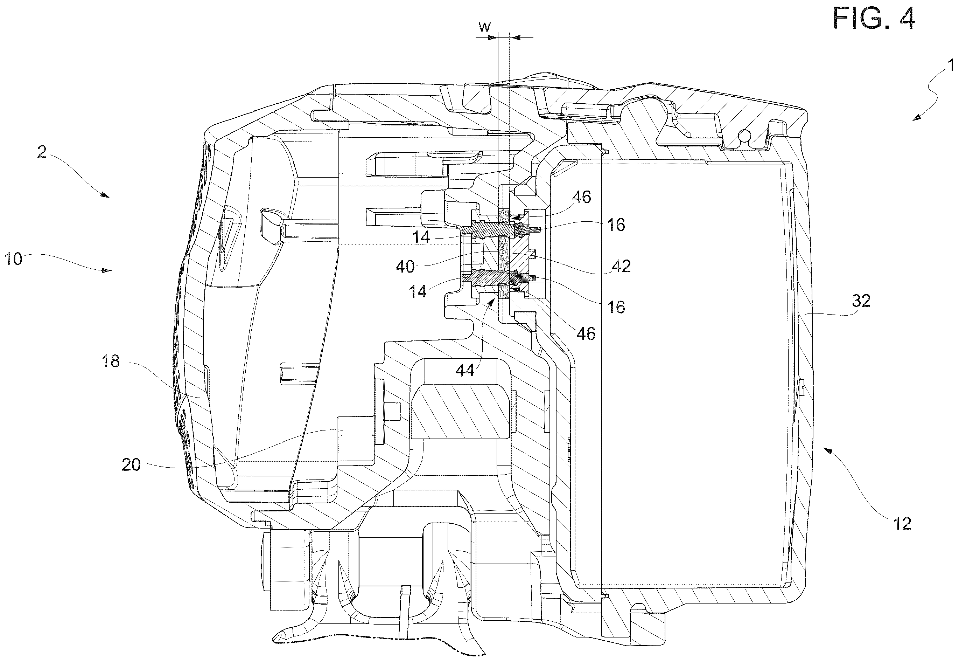

With reference to the example shown in figures 2 and 4, the first electric element 10 preferably comprises a first electric connector 28. The N conductive terminals 14 of the first electric element 10 are preferably positioned in correspondence with the first electric connector 28.

The N conductive terminals 14 of the first electric element 10 are preferably electrically connected to the electrically actuated device 20, so as to electrically connect the latter to the second electric element 12.

In the non-limiting example shown in figures 2 and 4, the first electric connector 28 is preferably realised on the support body 18. In particular, a portion of the support body 18 is shaped to define the first electric connector 28.

In other words, the N conductive terminals 14 of the first electric element 10 are preferably positioned on the support body 18 of said electric element 10.

With reference to figures 3 and 4, the second electric element 12 is preferably provided with a second electric connector 30 complementary to the first electric connector 28 and configured to be electrically coupled to the latter.

The N conductive terminals 16 of the second electric element 12 are preferably positioned in correspondence with the second electric connector 30.

The second electric connector 30 is preferably realised on the body of the second electric element 12. In particular, a portion of the body of the second electric element 12 is shaped to define the second electric connector 30.

In other words, the N conductive terminals 16 of the second electric element 12 are preferably position of the body of said electric element 12.

With reference to the example shown in figures 2 and 3, the first electric element 10 and the second electric element 12 may be configured to be coupled to each other, advantageously in a removable manned, by means of a snap coupling, a shape coupling, a bayonet coupling, threaded coupling members and/or other similar coupling systems.

More in detail, the first electric element 10 may be provided with a mounting seat 30. The second electric element 12 may have a shape complementary to the mounting seat 30 and/or may be shaped so as to be removably coupled to the mounting seat 30 of the first electric device 10.

With reference to the example shown in figures from 2 to 4, the second electric element 12 preferably comprises a power supply unit 32 connected to at least one of the N conductive terminals 16 of said electric element 12.

In other words, at least a conductive junction between the N conductive terminals 14 of the first electric element 10 and the N conductive terminals 16 of the second electric element 12, when in use, is employed to transfer electric power between the same electric elements 10 and 12.

More in detail, the power supply unit 32 preferably comprises a battery or an accumulator. In particular, the power supply unit 32 preferably comprises a chargeable battery or a secondary cell battery.

Additionally, the power supply unit 32 preferably comprises an outer protective casing within which the battery is housed.

The N conductive terminals 16 of the second electric element 12 are preferably electrically connected to the cells of said battery, so as to be able to electrically connect the latter to the first electric element 10.

Additionally, the electric power supply unit 32 preferably comprises an interface or a charging socket 34 suitable for allowing to electrically connect said electric power supply unit 32, in particular the battery cells, to a power supply network or another similar power source, for example by means of a power cable.

With reference to the preferred embodiment, the first electric element 10 and the second electric element 12 preferably comprise 4 conductive terminals 14 and 16 each.

Two pairs of conductive terminals 14 and 16, that is, two conductive junctions, may be employed to transfer electric power. The other two pairs of conductive terminals 14 and 16, that is, the other two conductive junctions 14 and 16, may be used for electric signals between the two electric elements 10 and 12.

In other words, the electric power supply unit 32 may comprise an electronic control unit configured to exchange data/signals related to the charge state of the battery of said electric power supply unit 32. The electric power supply unit 32 may comprise a *smart battery.* With reference to the example shown in figure 2, the first electric connector 28 is preferably provided with a seat 36 that houses the N conductive terminals 14.

Additionally, the second electric connector 30 is preferably provided with a seat 38, shown in figure 3, housing the N conductive terminals 16 and having a shape complementary to the seat 36 of the first electric connector 10.

More in detail, a first one between the seat 36 of the first electric connector 28 and the seat 38 of the second electric connector 30 has a concave shape. The other one between the seat 36 of the first electric connector 28 and the seat 38 of the second electric connector 30, on the other hand, has a convex shape and is intended to be inserted into the first one between the seat 36 of the first electric connector 28 and the seat 38 of the second electric connector 30.

In the example shown, the seat 36 of the first electric connector 28 ha a concave shape and the seat 38 has a convex shape.

Additionally, the seat 36 of the first electric connector 28 is preferably provided with a back wall 40.

The N conductive terminals 14 of the first electric connector 10 are preferably positioned on the back wall 40. Moreover, the back wall 40 is preferably orthogonal to the coupling direction d1, when the electric elements 10 and 12 are couple one to the other.

Additionally, the seat 36 is preferably provided with an annular shaped side wall, substantially continuously surrounding the back wall 40. The back wall 40 and the side wall define a cavity.

Additionally, the seat 38 of the second electric connector 30 is preferably provided with a front wall 42. The N conductive terminals 16 of the second electric connector 12 are preferably positioned on the front wall 42. Moreover, the front wall 42 is preferably orthogonal to the coupling direction d1, when the electric elements 10 and 12 are coupled one to the other.

In use, the front wall 42 is configured to engage the cavity of the first connector 36.
are configured to be arranged facing and parallel to each other, when the electric elements 10 and 12 are coupled together.

In particular, when the electric elements 10 and 12 are coupled together, the back wall 40 and the front wall 42 are preferably arranged at a mutual minimum distance w along the coupling direction d1.

In the example shown in figures 2, 3, and 4, the first of the N conductive terminals 14 of the first electric element 10 and the N conductive terminals 16 of the second electric element 12 are preferably of the male type.

The second of the N conductive terminals 14 of the first electric element 10 and the N conductive terminals 16 of the second electric element 12 are preferably of the female type.

Preferably, the first conductive terminals of the male type are shaped and sized to insert in and establish an electric contact with the respective second conductive terminals of the female type.

In the example shown, the N conductive terminals 14 of the first electric element 10 are of the male type and the N conductive terminals 14 of the second electric element 12 are of the female type.

Preferably, the N conductive terminals 14 of the first electric element 10 are arranged in the seat 36 having a concave shape, so as to be protected from accidental shocks even when the second electric element 12 is not connected to the first electric element 10.

Preferably, the N conductive terminals 14 of the first electric element 10 are carried by a first printed circuit board or PCB (acronym of Printed Circuit Board) (not visible), which is suitable for being arranged inside the support body 18 of the first electric element 10.

In particular, the N conductive terminals 14 of the first electric element 10 are cantilevered from said first printed circuit board. Additionally, said first printed circuit board is preferably arranged inside the support body 18 of the first electric element 10, behind the seat 36. On the other hand, the N conductive terminals 14 of the first electric element 10 preferably extend through the back wall 40 of the seat 36, so as to cantilever therefrom.

Similarly, the N conductive terminals 16 of the second electric element 12 are carried by a second printed circuit board or PCB (acronym of Printed Circuit Board) (not visible), which is suitable for being arranged inside the support body 18 of the second electric element 12.

In particular, the N conductive terminals 16 of the second electric element 12 are cantilevered from said second printed circuit board. Additionally, said second printed circuit board is preferably arranged inside the support body 18 of the second electric element 12, behind the seat 38. On the other hand, the N conductive terminals 16 of the second electric element 12 preferably extend through the front wall 42 of the seat 38, so as to cantilever therefrom.

According to a possible embodiment, the first of the N conductive terminals 12 of the first electric element 10 and the N conductive terminals 14 of the second electric element12 may be of the pogo-pin type.

The second of the N conductive terminals 12 of the first electric element 10 and the N conductive terminals 14 of the second electric element12 may be of the pogo-pin socket type. Additionally, the conductive terminals of the pogo-pin socket type are shaped and sized to receive and establish an electric contact with the respective conductive terminals of the pogo-pin type.

According to the preferred embodiment of the present invention shown in figures 2, 3, and 4, the bicycle device 1 further comprises an insulating structure or sealing element 44 arranged between and in direct contact with the first electric element 10 and the second electric element 12 when they are connected together.

The insulating structure 44 comprises a plurality of at least N-1 deformable insulating members 46. The deformable insulating members 46 are disposed around a respective conductive junction.

In particular, each deformable insulating member 46 is preferably positioned around a single conductive junction.

In other words, the insulating structure 44 preferably comprises at least a deformable insulating member 46, positioned around one of the at least two conductive junctions.

The arrangement of the at least N-1 deformable insulating members 46 around different N-1 conductive junctions provides the technical effect of mutually electrically insulating the N conductive junctions when the first electric element 10 is connected with the second electric element 12.

In particular, when the first electric element 10 is connected to the second electric element 12, the N-1 deformable insulating members 46 fluid-tightly separate the N conductive junctions from each other, thereby preventing the possible presence of water, moisture, or dirt from causing short circuits between at least two different conductive junctions.

With reference to the example shown, the insulating structure 44 preferably comprises N-1 deformable insulating members 46, so that at least each electric junction except one is surrounded by a respective insulating member 46.

Preferably, the deformable insulating members 46 are configured to surround substantially continuously the respective electric junctions.

In other words, the deformable insulating members 46 are configured to electrically isolate the conductive junctions from each other when the first electric element 10 is connected to the second electric element 12. In particular, the deformable insulating members 46 are configured to fluid-tightly separate the N conductive junctions from each other when the first electric element 10 is connected with the second electric element 12.

More in detail, the insulating members 46 are preferably provided, each, with a through opening 48 and are preferably configured for being arranged around a respective conductive terminal between the N conductive terminals 14 of the first electric element 10 or the N conductive terminals 16 of the second electric element 12, so as to surround the respective conductive junction when the first electric element 10 and the second electric element 12 are coupled together.

According to a possible embodiment, the deformable insulating members 46 are preferably positioned in direct contact with the respective conductive junction.

More in detail, the size of the through opening 48 approximate, by undersizing, the size of the respective conductive terminal, so that the insulating member 46 can be interference-fitted on the respective conductive terminal.

Alternatively, the deformable insulating members 46 may be arranged spaced apart from the respective conductive junctions.

More in detail, the size of the through opening 48 approximate the size of the respective conductive terminal by excess, so that the insulating member 46 may be fitted with clearance onto the respective conductive terminal.

Preferably, the deformable insulating members 46 are made of an electrically insulating polymeric material. More in detail, the deformable insulating members 46 are preferably made of an electrically insulating elastomeric material.

According to the preferred embodiment shown in figures from 2 to 7 and 10, the deformable insulating members 46 are preferably joined together so as to form a unitary body with a monolithic structure. In other words, the insulating structure 44 preferably further comprises a connecting body 45 which mechanically joins the deformable insulating members 46 to one another.

Preferably, the connecting body is made of the same material as the deformable insulating members 46.

More in detail, the deformable insulating members 46 and the connecting body are stably joined together so as to form a unitary body with a monolithic structure.

In other words, the insulating structure 44 is made of a unitary piece, that is, it comprises an insulating body with a monolithic structure.

Preferably, the insulating structure 44 further has a shape that approximate the shape of the back wall 40 of the first electric element 10 and/or of the front wall 42 of the second electric element 12.

With reference to the shown example, the insulating structure 44 is preferably separated and distinct from the first electric element 10 and/or from the second electric element 12.

Additionally, the insulating structure 44 is intended to be positioned, advantageously in a removable manner, on one of the first electric element 10 and the second electric element 12, before the latter are coupled together.

As an example, the insulating structure 44 may be mounted in a removable manner on one of the first electric element 10 and the second electric element 12, preferably by means of press-fitting or other similar process.

In particular, the deformable insulating members 46 are separate and distinct from the conductive terminals 14 of the first electric element 10 and/or from the conductive terminals16 of the second electric element 12. Additionally, the deformable insulating members 46 are intended for being positioned around respective conductive terminals before the electric elements 10 and 12 are coupled to one another.

In this way, the insulating structure 44 in use is interposed and in direct contact with the first electric element 10 and the second electric element 12 when the two electric elements are coupled to one another.

Alternatively, according to a possible embodiment, the insulating structure 44 may be integral with one of the first electric element 10 and the second electric element 12.

By way of example, the insulating structure may be fixed in a non-removable manner to one of the first electric element 10 and the second electric element 12, preferably by means of gluing, printing, co-printing, or other similar process.

The non-removable fixing of the insulating structure 44 on one of the first electric element 10 and the second electric element 12 provides the effect of preventing the risk of detachment and loss of the insulating structure when the second electric element 12 is separated from the first electric element 10.

According to the preferred embodiment shown in figure 4, the insulating structure 44. That is, the insulating members 46, along a direction orthogonal to the back wall 40 and to the front wall 42 greater than the minimum distance w, so as to be compressed between the back wall 40 and the front wall 42 when the first electric element 10 is coupled to the second electric element 12.

In other words, the thickness s of the insulating structure 44 along the coupling direction d1 is greater, that is it approximate by excess, the minimum distance w.

With reference to figure 4, the insulating structure 44 is preferably configured for engaging the gap or the volume defined between the back wall 40 of the first electric connector 28 and the front wall 42 of the second electric connector 30 when the first electric element 10 is coupled to the second electric element 12.

More in detail, the insulating structure 44 is preferably shaped and sized so as to completely fill/obstruct the gap defined between the back wall 40 of the first electric connector 28 of the first electric element 10 and the front wall 42 of the second electric element 12 when the first electric element 10 is coupled to the second electric element 12.

The general functioning of the bicycle electric device 1 may be readily understood from the above description and therefore requires no further explanation.

On the other hand, on the functioning of the insulating structure 44, the insulating structure 44 is intended to be coupled to the electric terminals 14 of the first electric element 10 or to the electric terminals 16 of the second electric element 12 before they are coupled to one another.

During the coupling of the two electric elements 10 and 12, the N-1 deformable insulating members 46 interpose between the N conductive junctions N, thereby fluid-tightly separating the latter and preventing short circuits of the conductive junctions themselves. Therefore, also in case of moist, water, or dirt accumulated in correspondence of the conductive terminals before the coupling of the two electric elements 10 and 12, the risk of short circuits is prevented in that the deformable insulating members 46 form a barrier which fluid-tightly separates the conductive junctions from one another and prevents the conduction of electricity between them.

From the foregoing, the advantages of the bicycle electric device 1 according to the present invention are evident.

The presence of the insulating structure 44, in particular of the deformable insulating members 46 around the respective conductive junctions prevents the onset of short circuits between the single conductive junctions, once the electric elements 10 and 12 are coupled to one another.

In particular, by virtue of tits deformability and to the thickness s greater than the minimum distance w, the insulating structure 44 is compressed and deformed between the back wall 40 of the first electric element 10 and the front wall 42 of the second electric element 12 when the two electric elements 10 and 12 are connected to one another.

Said deformation provides the technical effect of mechanically diverting possible water, moisture, or dirt possibly deposited in correspondence with the conductive terminals and prevents the circulation of electric current between the different conductive junctions.

Additionally, the presence of the insulating structure 44 between the conductive terminals electrically isolates

In addition, the presence of the insulating structure 44 between the conductive terminals electrically insulates the free ends of the latter from one another, thereby preventing a galvanic reaction between conductive terminals at different potentials and the consequent depletion of the metallic material of the conductive terminal at the lower potential. Finally, it is clear that modifications and variations may be made to the bicycle electric device according to the present invention without, however, departing from the scope of protection defined by the claims.

As an example, in figures 5, 6, and 7, it is shown an embodiment of the bicycle electoral device 1 similar to the one shown in figures from 2 to 4, wherein the common parts will be indicated by the same reference numbers and will not be further described for the sake of conciseness.

In the non-limiting example shown in figures from 5 to 7, the bicycle electric device 1 comprises a rear derailleur 3 suitable for being associated to the sprocket set 109.

In particular, one of the first electric element 10 and the second electric element 12 may comprise an electric and/or power supply cable 230 configured for being connected to the other one of the first electric element 10 and the second electric element 12.

The associated electric connector 28 or 30 may be carried by the electric cable 230.

In particular, one of the first electric connector 28 and the secondo electric connector 30, respectively, is separated and distinct from the body of the respective electric element 10 or 12. More in detail, one of the first electric connector 28 and the second electric connector 30 may be configured for being coupled, in a removable manner, with the body of the associated electric element 10 or 12.

It is understood that the associated electric conductive terminals 14 or 16 may be positioned in correspondence with the electric connector 28 or 30 carried by the electric cable 230.

In the example shown in figures from 5 to 7, the electric cable 230 may be configured for electrically connecting the first electric connector 28 to the electrically actuated device 20 housed in the support body 18 of the first electric element 10.

Clearly, according to an alternative embodiment not shown, the second electric element 12 might comprise an electric cable and an electric connector, which is carried by the electric cable and is configured to be connected to the electric connector of the first electric element 10.

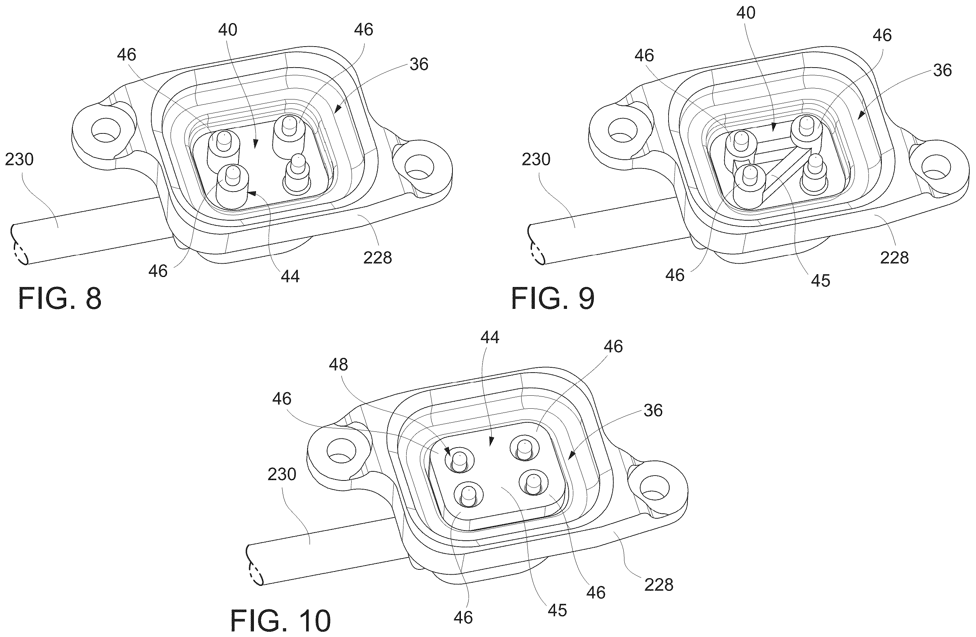

Figure 8 illustrates an exemplary embodiment of the insulating structure 44 in which the deformable insulating members 46 of the insulating structure 44 are separate and distinct from one another.

More in detail, each deformable insulating member 46 may be arranged around a respective conductive junction, that is, around a respective conductive terminal 14 or 16.

In particular, each deformable insulating member 46 may have an annular shape and may continuously surround a respective conductive junction.

Additionally, in figure 8 it is shown an exemplary embodiment wherein N-1 (in particular 3) deformable insulating members 46 are provided and N junctions (in particular 4) are provided.

More in detail, in the example shown in figure 8, the deformable insulating members 46 continuously surround the respective conductive junctions and are shaped only to electrically isolate them from one another.

As an example, the deformable insulating members 46 may have an annular shape and may be arranged around a respective conductive junction.

With reference to figure 9, on the other hand, it is shown an embodiment of the insulating structure 44 in which the connecting body 45 is defined by segments joining the deformable insulating members 46 to each other.

The presence of the connecting body 45 allows the insulating structure 44 to be handled as a single body, thereby facilitating assembly, disassembly, and maintenance operations.

The connecting body 45 may, in examples not shown in the figures, joins the deformable insulating members 46 together in couples, triples, or n-tuples. In this way, the insulating structure 44, when it comprises more than two deformable insulating members 46, would be composed of at least two elements, depending on the number of deformable insulating members 46, thereby simplifying the assembly, disassembly, and partial maintenance of the structure itself.

In another example, shown in figure 10, an embodiment of the insulating structure 44 provides that the connecting body completely fills the gap between the insulating members 46. This results in an insulating structure 44 formed as a unitary piece, that is, with a monolithic structure. In other words, the examples shown in figures 9 and 10 show the connecting body 45 joining together the deformable insulating members 46.

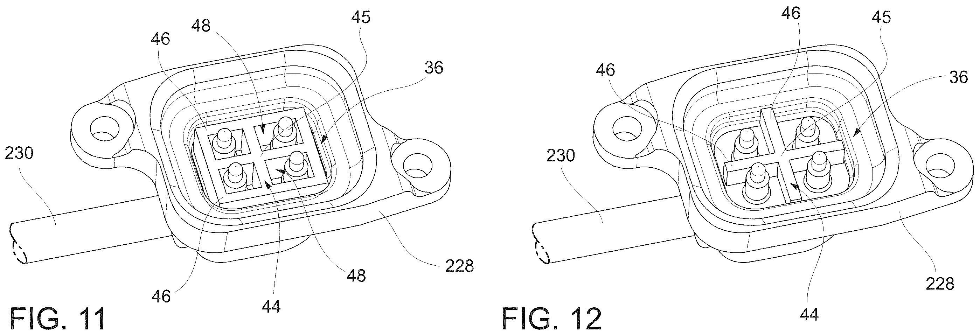

Figure 11 shows the insulating structure 44 of figure 10 wherein the deformable insulating members 46 are spaced from the respective conductive junctions. In other words, the deformable insulating members 46 may be fitted with a clearance on the respective conductive junctions. In particular, the through openings 48 of the deformable insulating members may approximate, by excess, the size of the respective conductive junctions.

Finally, figure 12 shows the insulating structure of figure 11 without circumferential edge. In this example, the deformable insulating members 46 of figure 12 do not continuously surround the respective conductive junction, that is, they may have a non-annular shape.

In the examples shown in figures 10, 11, and 12, the deformable insulating members 46 and the connecting body 45 are joined to one another so as to constitute a unitary body.

As an example, the deformable insulating members 46 may comprise bars of insulating materials configured to be interposed between two different conductive junctions.

In the example shown in figure 12, in particular, the supporting structure 44 is substantially cross-shaped and the various bars of insulating material are joined together so as to from a unitary body.

In other words, the supporting structure 44 of figure 12 is shaped in segments that depart from a common centre, each segment separating two conductive junctions on a plane parallel to the back wall 40 and to the front wall 42. It is evident that, in case of a number of conductive junctions greater than four, the insulating structure 44 would assume a star-like shape with N-1 arms.

Also in the example shown in figure 12, the function of electric insulation and of fluid-tight separation of the conductive junctions is ensured. In fact, in general, the insulation is mainly achieved through the action of electric separation and fluid-tight mechanical sealing between each pair of conductive joints in the planes corresponding to the back wall 40 and the front wall 42.

Additionally, in the example shown in figure 12, the arms/segments of the supporting structure 44 extend so as to abut against the side walls of the respective connector 28 or 30 defining the respective seat 36 or 38, so as to ensure a fluid-tight sealing between two distinct conductive junctions.

## Claims

1. Bicycle electric device (1) comprising a first electric element (10) and a second electric element (12), removably connected to each other, each of which comprises a plurality of N conductive terminals (14, 16),
wherein, when the first (10) and the second electric element (12) are connected, each conductive terminal (14) of the first electric element (10) is in electric contact with a corresponding conductive terminal (16) of the second electric element (12), forming a plurality of N conductive junctions between the first electric element (10) and the second electric element (14), and
wherein at least one conductive junction is used to transfer power,
the electric bicycle device (1) **being characterized in that** it comprises an insulating structure (44) interposed between and in direct contact with the first electric element (10) and the second electric element (12), when connected,
the insulating structure (44) comprising a plurality of at least N-1 deformable insulating members (46), in which each deformable insulating member (46) is located around a single conductive junction.

2. Device according to claim 1, in which the insulating structure (44) includes N deformable insulating members (46).

3. Device according to claim 1 or 2, wherein the deformable insulating members (46) are located at a predetermined distance from the respective conductive junction.

4. Device according to claim 1 or 2, wherein the deformable insulating members (46) are in contact with the respective conductive junction.

5. Device according to any of the preceding claims, wherein the deformable insulating members (46) are mechanically connected to each other by a connecting body, preferably made of the same material as the deformable insulating members (46).

6. Device according to claim 5, wherein the insulating structure (44) is monolithic and the deformable insulating members (46) and the connecting body are made in one piece.

7. Device according to any of the preceding claims, wherein the insulating structure (44) is integral with the first electric element (10) or the second electric element (12).

8. Device according to any of the preceding claims, wherein the first electric element (10) is provided with a seat (36) having a back wall (40) comprising the N conductive terminals (14) of the first electric element (12), and
the second electric element (12) is:
shaped so that it can be coupled to the seat (36) of the first electric element (10) along a predetermined coupling direction (d₁), and
equipped with a front wall (42) comprising the conductive N terminals (16) of the second electric element (12) and adapted be arranged at a predetermined minimum distance (w) from the back wall (40) of the seat (36) along the coupling direction (d₁) when the second electric element (12) is connected to the first electric element (10), and
wherein the insulating structure (44) is interposed between and in direct contact with the back wall (20) and the front wall (24) and has a thickness (s), along a direction perpendicular to the back wall (20) and the front wall (24), greater than the minimum distance (w), so that it is compressed between the back wall (40) and the front wall (40).

9. Device according to any of the preceding claims, in which the conductive terminals (14, 16) of one between the first electric element (10) and the second electric element (12) are of the pogo pin type, and in which the conductive terminals (14, 16) of the other between the first electric element (10) and the second electric element (12) are of the pogo pin socket type, shaped and sized to receive and establish electric contact with a corresponding conductive terminal (14, 16) of the pogo pin type.

10. Device according to any one of claims 1 to 8, wherein the conductive terminals (14, 16) of one between the first electric element (10) and the second electric element (12) are male type, and wherein the conductive terminals (14, 16) of the other between the first electric element (10) and the second electric element (12) are female type, in which conductive terminals (14, 16) of the male type are shaped and sized to fit into and make electric contact with a corresponding conductive terminal (14, 16) of the female type.

11. Device according to any of the preceding claims, wherein one between the first electric element (10) and the second electric element (12) comprises an electric power supply unit (32) connected to at least one conductive terminal (14, 16) of the plurality of N conductive terminals (14, 16).

12. Device according to claim 11, in which the power supply unit (32) includes a battery.

13. Device according to claim 11 or 12, wherein the other between the first electric element (10) and the second electric element (12) comprises a power cable (230) and an electric connector (28) electrically connected to each other, wherein the connector comprises the N conductive terminals (14) of the other between the first electric element (10) and the second electric element (12).

14. Device according to claim 11 or 12, wherein the other between the first electric element (10) and the second electric element (12) comprises an electrically actuated device (20) electrically connected to the N conductive terminals (14) of the other between the first electric element (10) and the second electric element (12).

15. Device according to any of the preceding claims, wherein one of the first electric element (10) and the second electric element (12) further comprises a support body (18) suitable for attachment to said bicycle (100), and wherein the device (1) is a bicycle derailleur (2, 3).
